# EUROPEAN PATENT APPLICATION

(11) **EP 2 166 033 A1**
(43) Date of publication of application: **24.03.2010**
(21) Application number: 08778078.9
(22) Date of filing: 11.07.2008
(51) Int. Cl.: C08J 9/02, C08G 73/10

(54) **METHOD FOR PRODUCTION OF POLYIMIDE FOAM, AND POLYIMIDE FOAM**

(30) Priority: 11.07.2007 JP 2007182549; 31.10.2007 JP 2007283597
(71) Applicant: Ube Industries, Ltd., Ube-shi Yamaguchi 755-8633 (JP)
(72) Inventor: ARAI, Tatsuya, Ube-shi Yamaguchi 755-8633 (JP); YAMAGUCHI, Hiroaki, Ube-shi Yamaguchi 755-8633 (JP)
(74) Representative: Forstmeyer, Dietmar
(86) International application number: PCT/JP2008/062562
(87) International publication number: WO 2009/008499

(57) **Abstract**

A polyimide foam formed of an aromatic polyimide prepared from a 3,3',4,4'-biphenyltetracarboxylic acid component and an aromatic diamine component. The polyimide foam has flexibility at least such that no cracking occurs when a specimen of the polyimide foam with a 1 cm by 1 cm cross-section and a length of 5 cm is deformed until both ends thereof come into contact with each other to make a closed loop. The polyimide foam is obtained by dissolving a 3,3',4,4'-biphenyltetracarboxylic acid component and an aromatic diamine component in a solvent in the presence of an acid phosphoric ester having a specific structure to prepare a polyimide precursor and heating the polyimide precursor to expand.

## Description

### Technical Field

This invention relates to a polyimide foam having mechanical characteristics required for practical use as a foam, such as flexibility not to easily crack when deformed and good cushioning properties and a process of producing a polyimide foam having a uniform cell structure and a high closed cell content. In particular, it relates to a polyimide foam prepared from 3,3',4,4'-biphenyltetracarboxylic acid component and an aromatic diamine component and having a fine and uniform cell structure and practical mechanical characteristics as a foam, such as flexibility not to crack easily when deformed and good cushioning and a process of producing the same.

### Background Art

Polyimide foams have been extensively studied with the expectation of exhibiting excellent characteristics, such as heat resistance. Most of conventional polyimide foams are obtained by subjecting a polyimide precursor prepared from, for example, a diamine and a tetracarboxylic acid ester to heating or exposure to microwave radiation to induce polymerization and imidation with expansion.
Patent document 1 (see below) describes a process of preparing a particulate polyimide precursor for the production of a polyimide foam, in which a solution containing a diamine and a 3,3',4,4'-benzophenonetetracarboxylic acid ester is atomized using a spray dryer.
Patent document 2 (see below) discloses a liquid resin precursor for the production of a polyimide foam containing a diamine and a tetracarboxylic acid ester and a process for producing a polyimide foam including drying and powderizing the liquid resin precursor and exposing the resulting powdered polyimide precursor to microwave radiation.
Patent document 3 (see below) proposes a process of producing a durable polyimide foam that does not break or disintegrate in a high-cycle dynamic fatigue test by using an aliphatic diamine as a diamine component. This process, however, sacrifices heat resistance because of use of the aliphatic diamine.
Patent document 4 (see below) discloses a process of producing an amic acid foam, in which a tetracarboxylic acid dianhydride, a foam stabilizer, water, and a polyhydric alcohol containing a tertiary amino group are caused to react with each other to make a resin foam having an amic acid linkage. While patent document 4 proposes using a phosphoric ester, there is no mention about use of an acid phosphoric ester.

Patent document 5 (see below) discloses a polyimide foam obtained by using 3,3',4,4'-benzophenonetetracarboxylic acid diester as a tetracarboxylic acid component
When in using a 3,3',4,4'-biphenyltetracarboxylic acid diester as a tetracarboxylic acid component, it is difficult to prepare a uniform solution with an aromatic diamine due to liability to crystallization. That is, it is difficult to prepare a polyimide precursor having the 3,3',4,4'-biphenyltetracarboxylic acid diester and an aromatic diamine in a well dispersed state, resulting in a failure to produce a polyimide foam having practical mechanical properties.
Patent document 6 (see below) proposes a process comprising causing a 3,3',4,4'-biphenyltetracarboxylic acid diester to form a complex with an ether, e.g., THF by hydrogen bonding, preparing a uniform solution of the complex and an aromatic diamine, forming a polyimide precursor from the solution, and converting the precursor to a polyimide foam. However, the resulting polyimide foam prepared using the 3,3',4,4'-biphenyltetracarboxylic acid diester has a very coarse and nonuniform cell structure. Furthermore, because of a small expansion ratio (a high apparent density), the foam lacks mechanical properties for practical use as a foam such that it is not easily deformable and has poor cushioning.

Patent document 1: JP 57-53533A
Patent document 2: JP 57-80427A
Patent document 3: JP 61-195126A
Patent document 4: JP 2005-330392A
Patent document 5: JP 59-145222A
Patent document 6: JP 2000-515584A

### Disclosure of the Invention

### Problem to be Solved by the Invention

The polyimide that constitutes a polyimide foam obtained by the aforementioned processes often has poor flexibility. It has been demanded to develop a process for producing a polyimide foam with improved practical mechanical properties for use as a foam, such as flexibility not to easily crack when deformed and good cushioning properties.
Accordingly, an object of the invention is to provide a polyimide foam having practical mechanical characteristics as a foam, such as flexibility not easily crack when deformed and good cushioning properties and a process of producing a polyimide foam having a uniform cell structure and a high closed cell content.

Another object of the invention is to provide a polyimide foam prepared from 3,3',4,4'-biphenyltetracarboxylic acid component and an aromatic diamine component and having a fine and uniform cell structure and practical mechanical characteristics as a foam, such as flexibility not to easily crack when deformed and good cushioning and a process of producing the same.

### Means for Solving the Problem

The invention provides a process for producing a polyimide foam including the steps of dissolving an aromatic tetracarboxylic acid component and an aromatic diamine component in a solvent in the presence of an acid phosphoric ester represented by chemical formula (1) shown below to prepare a polyimide precursor and heating the polyimide precursor to cause the polyimide precursor to expand.

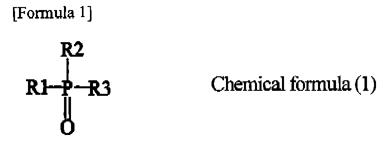

wherein the definitions of R1, R2, and R3 are selected from the following combinations of substituents: (a) R1 is OH, and R2 and R3 are each independently OR; (b) R1 and R2 are each OH, and R3 is OR; and (c) R1 is CH₂COOY, and R2 and R3 are each independently OR; wherein R is an alkyl group having 1 to 25 carbon atoms or an alkenyl group having 1 to 25 carbon atoms, the alkyl group and the alkenyl group being optionally substituted with an alkoxy group having 1 to 25 carbon atoms or an alkyl group having 1 to 5 carbon atoms; and Y is a hydrogen atom or an alkyl group having 1 to 5 carbon atoms.

The invention also provides an embodiment of the process, in which the aromatic tetracarboxylic acid component is a 3,3',4,4'-biphenyltetracarboxylic acid component.

The invention also provides an embodiment of the process, in which the acid phosphoric ester is present in an amount of 0.1 to 10 parts by mass per 100 parts by mass of the total of the aromatic tetracarboxylic acid component and the aromatic diamine component.

The invention also provides an embodiment of the process, in which the acid phosphoric ester has a decomposition temperature of 180°C or higher.

The invention also provides an embodiment of the process, in which the polyimide precursor has the form of a green body of powder.

The invention also provides an embodiment of the process, further including the step of mixing the polyimide precursor with at least one compound that is liquid at ambient temperature and selected from the group consisting of water, an alcohol, and an ether before the step of heating.

The invention also provides an embodiment of the process, in which the heating is microwave heating.

The invention also provides an embodiment of the process, further including The invention also provides an embodiment of the process, further including the step of further heating the polyimide foam obtained by the step of heating to expand at a temperature higher than the glass transition temperature of the polyimide constituting the polyimide foam.

The invention also provides a polyimide foam produced by any of the above-described process and its embodiments.

The invention also provides a polyimide foam formed of an aromatic polyimide prepared from a 3,3',4,4'-biphenyltetracarboxylic acid and an aromatic diamine component. The polyimide foam has flexibility at least such that no cracking occurs when a specimen of the polyimide foam with a 1 cm by 1 cm cross-section and a length of 5 cm is deformed until both ends thereof come into contact with each other to make a closed loop.

The invention also provides an embodiment of the polyimide foam, having The invention also provides an embodiment of the polyimide foam, having cushioning properties such that, when a 2 cm-side cubic specimen of the polyimide foam is compressed by applying a load to one surface of the specimen to a thickness of 0.2 cm, held in the compressed state for 30 seconds, and released from the load, the permanent strain in thickness is 10% or less.

The invention also provides an embodiment of the polyimide foam, wherein The invention also provides an embodiment of the polyimide foam, wherein cells having a diameter ranging from 1 to 1000 µm occupy at least 80% of a cross-sectional area of the foam.

The invention also provides an embodiment of the polyimide foam, wherein the aromatic diamine component is m-phenylenediamine, 3,4'-oxydianiline, 2,4-diaminotoluene, or a mixture thereof.

The invention also provides a polyimide foam formed of an aromatic polyimide prepared from a 3,3',4,4'-biphenyltetracarboxylic acid component and an aromatic diamine component, having an expansion ratio of at least 150 (an apparent density of 0.0092 g/cm³ or less).

The invention also provides a process for producing the above described polyimide foam formed of an aromatic polyimide prepared from a 3,3',4,4'-biphenyltetracarboxylic acid component and an aromatic diamine component. The process includes the steps of dissolving the 3,3',4,4'-biphenyltetracarboxylic acid component and the aromatic diamine component in a solvent in the presence of an acid phosphoric ester represented by chemical formula (1) shown above to prepare a polyimide precursor and heating the polyimide precursor to cause the polyimide precursor to expand.

### Best Mode for Carrying out the Invention

Examples of the aromatic tetracarboxylic acid component that can be used in the invention include, but are not limited to, a 3,3',4,4'-biphenylteracarboxylic acid component, a 2,3,3',4'-biphenyltetracarboxylic acid component, a 2,2',3,3'-biphenyltetracarboxylic acid component, a 3,3',4,4'-benzophenonetetracarboxylic acid component, a pyromellitic acid component, a 4,4'-oxydiphthalic acid component, a 3,3',4,4'-diphenylsulfonetetracarboxylic acid component, a 2,2-bis(4-phenoxyphenyl)propanetetracarboxylic acid component, a 2,3,6,7-naphthalenetetracarboxylic acid component, and a 1,4,5,8-naphthalenetetracarboxylic acid component. They may be used either alone or in combination of two or more thereof. As used herein, the term "tetracarboxylic acid component" refers to a tetracarboxylic acid compound capable of forming a polyimide, including a tetracarboxylic acid, an anhydride thereof, and an ester derivative thereof.
It is preferred to use an ester derivative formed with a C1-C6 lower (alkyl) alcohol, particularly an aromatic tetracarboxylic acid diester with a C1-C6 lower alcohol (i.e., aromatic tetracarboxylic diester-dicarboxylic acid). The aromatic tetracarboxylic acid diester is obtained easily by adding an aromatic tetracarboxylic acid dianhydride to a C1-C6 lower alcohol and causing them to react at or below 120°C for about 0.1 to 24 hours, preferably about 1 to 12 hours. The C1-C6 lower alcohol is preferably methanol, ethanol, propanol, butanol, or a mixture thereof.
Biphenyltetracarboxylic acid diesters, benzophenonetetracarboxylic acid diesters, and their mixtures are particularly suitable in the invention.

Any aromatic diamine compounds capable of forming a polyimide may be used as an aromatic diamine component, including aromatic diamines and their derivatives, such as derivatives having the amino group converted to an isocyanate group. Examples of useful aromatic diamines and their derivatives include 3,4'-oxydianiline, 4,4'-oxydianiline, zzt-phemylenediamine, p-phenylenediamine, 2,4-diaminotoluene, 1,3-bis(3-aminophenoxy)benzene, 1,3-bis(4-aminophenoxy)benzene, 3,3'-diaminodiphenylsulfone, 4,4'-diaminodiphenylsulfone, bis(4-(4-aminophenoxy)phenyl)sulfone, bis(4-(3-aminophenoxy)phenyl)sulfone, 4,4'-bis(3-aminophenoxy)biphenyl, 4,4'-bis(4-aminophenoxy)biphenyl, 2,2-bis(4-(4-aminophenoxy)phenyl)propane, 4,4'-methylenedianiline, and 2,6-diaminotoluene. They may be used either individually or in combination of two or more thereof.
It is preferred to use, as an aromatic diamine component, aromatic diamine, particularly m-phenylenediamine, 3,4'-oxydianiline, 2,4-diaminototuene, 4,4'-methylenedianiline, or a mixture thereof.
A diaminosiloxane, such as 1,3-bis(3-aminopropyl)tetramethylsilane, may be used in combination in a small amount, specifically not more than 5 mol%, preferably not more than 3 mol%, of the total diamine component.

The acid phosphoric ester that can be used in the invention is represented by chemical formula (1). The acid phosphoric ester is a pentavalent phosphorus compound having at least one hydroxyl group per molecule or a pentavalent phosphorus compound having at least one CH₂COOY group per molecule. Examples of suitable acid phosphoric esters include monomethyl phosphate, dimethyl phosphate, monoethyl phosphate, diethyl phosphate, monobutyl phosphate, dibutyl phosphate, mono(2-ethylhexyl) phosphate, di(2-ethylhexyl) phosphate, monooleyl phosphate, dioleyl phosphate, monoisopropyl phosphate, diisopropyl phosphate, monostearyl phosphate, distearyl phosphate, and ethyl diethyl phosphonoacetate.
These acid phosphoric esters are available under product names "JP-502" (ethyl acid phosphate), "JP-504" (butyl acid phosphate), "JP-508" (2-ethylhexyl acid phosphate), and "JP-518-0 (oleyl acid phosphate), all of which are mono ester/diester mixtures from Johoku Chemical Co., Ltd.; "JUMP-18-0" (ethyl acid phosphate) and "JUMP-18" (stearyl acid phosphate), both of which are monoesters from Johoku Chemical; and "DBP" (dibutyl phosphate) and "LB-58" (bis(2-ethylhexyl)phosphate), both of which are diesters from Johoku Chemical; "JC-224"(ethyl diethyl phosphonoacetate) from Johoku Chemical Co., Ltd..
The acid phosphoric ester preferably has a decomposition (onset) temperature of 180°C or higher. As will be discussed below, the production of a polyimide foam involves heat treatment at a high temperature, usually 180°C or higher. When the acid phosphoric ester decomposes below 180°C, the effect of the acid phosphoric ester cannot be exerted in the production of a polyimide form, especially in the stage where the acid phosphoric ester is expected to give great influences on the mechanical characteristics of the foam. The decomposition temperature of the acid phosphoric ester is more preferably lower than 300°C, even more preferably lower than 290°C. The highest heating temperature in the production of a polyimide fo is usually 300°C or even higher. It is preferred in view of improvement of mechanical characteristics, such as cushioning properties, that the acid phosphoric ester decompose during the step of heating so as to provide a polyimide foam free from the acid phosphoric ester.

The process of producing a polyimide foam according to the invention is characterized by use of a polyimide precursor having a disperse state a molecular level, the polyimide precursor being obtained by uniformly dissolving and mixing at least the aromatic tetracarboxylic acid component, aromatic diamine component, and acid phosphoric ester in a solvent. In the polyimide precursor, the above components are uniformly dispersed at a molecular level, and the aromatic tetracarboxylic acid component and the aromatic diamine component may form a salt.
The polyimide precursor is obtained with ease by adding an aromatic diamine component and an acid phosphoric ester to a solution of an aromatic tetracarboxylic acid component (e.g., an aromatic tetracarboxylic acid diester) and stirring the mixture preferably at a temperature of 60°C or lower (usually room temperature, 24°C), preferably for a period of about 0.1 to 6 hours (usually 1 to 2 hours). The aromatic tetracarboxylic acid component and the aromatic diamine component are preferably used at an approximately equimolar ratio, specifically an aromatic tetracarboxylic acid component to aromatic diamine component molar ratio of 0.95 to 1.05 The amount of the acid phosphoric ester to be added is selected in a range that gives a uniform solution and is preferably 0.1 to 10 parts, more preferably 1 to 5 parts, even more preferably 2 to 3 parts, by mass per 100 parts by mass of the total amount of the aromatic tetracarboxylic acid component and the aromatic diamine component

When the acid phosphoric acid is added in an amount mo than 10 parts by mass, it can decompose during the step of expansion, and the decomposition product may adversely affect the characteristics of the polyimide foam. If the acid phosphoric acid is not added or added in an amount less than 0.1 part by mass, a precipitate can form, resulting in a failure to prepare a uniform solution. As a result, a polyimide foam with practical mechanical properties is not obtained.

Any solvent may be used to prepare a polyimide precursor as long as it dissolves the aromatic tetracarboxylic acid component, aromatic diamine component, and acid phosphoric ester. Alcohols, ethers, ketones, and other organic solvents are suitable. In the case where the resulting polyimide precursor is to be powderized, use of a low-boiling solvent is preferred.
The preparation of the polyimide precursor may be carried out by causing an aromatic tetracarboxylic acid dianhydride to react in a lower alcohol to form an aromatic tetracarboxylic acid diester and adding the aromatic diamine component and the acid phosphoric ester to the reaction system.

If desired, additives, such as a surfactant, a catalyst, and a flame retardant, may be added to the polyimide precursor. In the case where the aromatic diamine component and the acid phosphoric ester are added to the aromatic tetracarboxylic acid diester solution to prepare a uniform solution, the additives may be added either before or after the addition of the aromatic diamine component but is preferably added before the addition of the aromatic diamine component.
The surfactant (foam stabilizer) is preferably selected from those suitably used as a foam stabilizer of polyurethane foams. Among them preferred are polyether-modified silicone oils, such as a polydimethylsiloxane graft copolymer having part of the methyl groups replaced with a polyalkylene oxide group, such as a polyethylene oxide group, a poly(ethylene-propylene)oxide group, or a propylene oxide group (the terminal of the polyalkylene oxide group is a hydroxyl group, an alkyl (e.g., methyl) ether group, or an alkyl ester group (e.g., acetyl ester)).
Examples of the polyether-modified silicone oils are S14-193, SH-192, SH-194, SH-190, SF-2937, SF-2908, SF-2904, SF-2964, SRX-298, SRX-2908, SRX-274C, SRX-295, SRX-294A, and SRX-280A(all from Dow Corning Toray); L-5340, SZ-1666, and SZ-1668 (all from Nippon Unicar); TFA4205 (from GE Toshiba Silicones); and X-20-5148 (from Shin-Etsu Chemical).
To accelerate polymerization and imidation, a catalyst selected from imidazoles (e.g., 1,2-dimethylimidazole and benzimidazole), quinolines (e.g., isoquinoline), pyridines (e.g., pyridine), and the like may be used.
While the polyimide foam of the invention exhibits high flame retardance by itself, a phosphorus compound, such as a trivalent phosphorous ester, may be added to improve the flame retardance.

The polyimide foam of the invention is obtained conveniently by, for example, adding an aromatic diamine component and an acid phosphoric ester to a solution of an aromatic tetracarboxylic acid component (e.g., an aromatic tetracarboxylic acid diester) to prepare a polyimide precursor solution, and heating the polyimide precursor as in the form of a solution. The polyimide foam of the invention is also obtained conveniently using a powdered polyimide precursor which is obtained easily by removing the solvent (e.g., an alcohol) from the polyimide precursor solution. The powdered polyimide precursor may be compressed into a green body, which is then heated. The polyimide foam of the invention is also obtained conveniently by heating a mixture (in the form of solution or slurry) of the powdered polyimide precursor and an appropriate solvent. The solvent to be used here is suitably chosen from those having low boiling point (preferably 150°C or lower, more preferably 100°C or lower), such as water, alcohols (particularly C1-C6 lower (alkyl) alcohols), and ethers.

Powderization of the polyimide precursor is achieved conveniently by evaporating the solvent from the polyimide precursor solution and grinding the resulting solid. Evaporation of the solvent and powderization may be effected simultaneously by spray drying the polyimide precursor solution. Heating for solvent removal by evaporation is suitably at a temperature that does not cause expansion, preferably 100°C or lower, more preferably 50°C or higher. When the polyimide precursor solution is evaporated to dryness at a temperature higher than the temperature recited, the resulting powdered polyimide precursor will have considerably reduced expanding ability. The evaporation of the solvent or drying of the powder may be performed under normal, elevated, or reduced pressure.

The green body is obtained conveniently by, for example, filling a mold with the powdered polyimide precursor and compressing the powder. The green body is also obtainable by casting a solution of the polyimide precursor in an appropriate solvent, such as a lower alcohol, in a mold and evaporating the solvent to dryness.

When the powdered polyimide precursor is re-mixed with a solvent, it is mixed with an adequate amount of a solvent, preferably a lower alcohol, to obtain a mixture in the form of solution or slurry. The mixing may be carried out while heating, but the heating is preferably at or below 100°C, more preferably at or below 60°C. It is the most preferred to conduct the mixing without heating, i.e., at or below room temperature.

The manner of heating to cause the polyimide precursor to expand to produce a polyimide foam is not restricted as long as the polyimide precursor is heated to expand. For example, the heating is conveniently carried out using an oven, microwave oven, or a like heating device. The heating conditions including temperature and time are decided as appropriate to the kind and amount of the polyimide precursor.

In the case of using an oven, the heating temperature for expansion is preferably 80° to 200°C, more preferably 100° to 180°C, even more preferably 130° to 150°C, and the heating time is preferably 5 to 60 minutes, more preferably about 10 to 30 minutes. When heated at temperatures lower than the recited preferred heating temperature, the polyimide precursor needs an unfavorably extended period of time to expand. When the heating temperature is higher than the recited preferred temperature, it is difficult to obtain a polyimide foam having a uniform cellular structure.

In the case of using a microwave oven in Japan, microwaving is usually effected at a frequency of 2.45 GHz as regulated by Radio Act of Japan. As the amount of the polyimide precursor increases, the output required increases. For example, an output of 1 to 5 kW is suitably used to treat several tens to several thousands of grams of the polyimide precursor powder. On being exposed to microwave radiation, the polyimide precursor starts expanding usually in about 1 to 2 minutes and completes expansion in 5 to 10 minutes.
In either case of an oven heating or a microwave heating, the polyimide foam at the completion of expansion does not have sufficient mechanical strength. It is therefore preferred that the resulting polyimide foam be subjected to post-heating using a heater, such as an oven.

The post-heating is usually carried out in a temperature range of from 200°C to a temperature higher than the glass transition temperature of the polyimide foam by 10°C, preferably from the glass transition temperature to a temperature higher than the glass transition temperature by 10°C, generally from 200° to 400°C, preferably 280° to 370°C, for 5 minutes to 24 hours, while varying with the size of the polyimide foam. The post-heating may be performed at a varying temperature following a programmed temperature profile. For example, the heating temperature may be gradually elevated from a relatively low temperature of about 200°C at a rate of 10°C/min up to about 300°C or even higher to complete the heat treatment.

The expansion ratio and apparent density (density) are appropriately controlled by the amount of the volatile components (the alcohol and water generated by polymerization and imidation, a solvent, and volatile additives), the heating method, the heating temperature profile, and other conditions.

It is considered that the acid phosphoric ester of chemical formula (1) plays a role in converting the essentially poorly soluble aromatic tetracarboxylic acid component and aromatic diamine component into a uniform solution and causing them to act on each other at a molecular level through some mechanism to form a polyimide precursor in the form of what we call a molecular dispersion. The acid phosphoric ester of chemical formula (1) is also considered to accelerate the polymerization and imidation of the polyimide precursor during expansion by heating. This accelerating effect also works particularly effectively in the post-heating step. It is believed to follow that the polyimide foam obtained in the invention is formed of a polyimide having a larger molecular weight than the conventional polyimide foam.
Thus, the use of the uniformly dispersed polyimide precursor and acquisition of a sufficiently high molecular weight during expansion allow for formation of a fine and uniform cell structure in the step of expansion to provide a polyimide foam having practical mechanical properties in terms of flexibility not to easily crack when deformed and good cushioning.

The polyimide foam obtained in the invention preferably has a fine and uniform cell structure. The cells may be open or closed. As used herein, the term "cell", whether open or closed, refers to a bubble that is regarded to have resulted from expansion as a single bubble. Accordingly, a plurality of cells that are connected to one another at the completion of expansion are regarded to be individual cells. The cells of the polyimide foam obtained in the invention generally have a diameter of 5000 µm or less, preferably 3000 µm or less, more preferably 0,1 to 2000 µm, even more preferably 1 to 1000 µm. The term "generally" as used above is intended to means that at least 80%, preferably 90% or more, of a cross-sectional area of the foam is composed of cells of the size recited. As used herein, the term "diameter" refers to the largest inner diameter of cells on a cross-section of the foam.

That is, a preferred embodiment of the polyimide foam of the invention has a fine and uniform cell structure, wherein cells having a diameter ranging from 1 to 1000 µm occupy at least 80%, preferably 90% or more, of a cross-sectional area of the foam.
The polyimide foam of the invention preferably has an expansion ratio of 50 or higher (corresponding to an apparent density of 0.0272 g/cm³ or less), more preferably 100 or higher (an apparent density of 0.0136 g/cm³ or less), and of 500 or lower (an apparent density of 0.0027 g/cm³ or more), more preferably 400 or lower (an apparent density of 0.0034 g/cm³ or more). At an expansion ratio lower than 50, not only is the foam too stiff to exhibit flexibility and cushioning, but the characteristics commonly expected of a foam, such as lightweight, are not obtained. At an expansion ratio higher than 500, the cell walls become too thin only to provide a foam with reduced mechanical properties such that the foam easily cracks when deformed, failing to exhibit practical mechanical characteristics as a foam, such as flexibility and cushioning,

The present invention provides a polyimide foam having a fine and uniform cell structure formed of a sufficiently high molecular weight polyimide that may have either a low expansion ratio (high density) or a high expansion ratio (low density) and yet exhibits excellent flexibility and cushioning. That is, the polyimide foam of the invention has an expansion ratio preferably, though not limitedly, of from 50 to 500 and is superior in practical mechanical characteristics as a foam, such as sufficient flexibility not to easily crack when deformed and good cushioning properties.

In particular, the polyimide foam formed of an aromatic polyimide prepared from a 3,3',4,4'-biphenyltetracarboxylic acid component (as an aromatic tetracarboxylic acid component) and an aromatic diamine component has flexibility such that no cracking occurs when a rod-shaped specimen of the polyimide foam with a 1 cm by 1 cm cross-section and a length of 5 cm is deformed into a closed loop. The above specified polyimide foam will hereinafter be referred to as a polyimide foam A.
The polyimide constituting the polyimide foam A has a repeating unit (1):

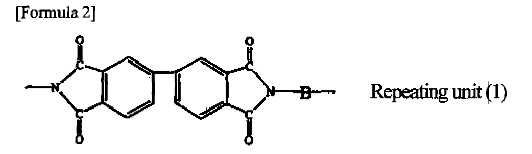

wherein B represents a divalent aromatic group.

The polyimide foam A may contain any tetracarboxylic acid component other than a 3,3',4,4'-biphenyltetracarboxylic acid component within a range that does not negate the effects of the embodiment. Preferably, the proportion of the 3,3',4,4'-biphenyltetracarboxylic acid component in the total tetracarboxylic acid component is at least 60 mol%, more preferably 80 mol% or more, even more preferably 90 mol% or more, most preferably 100 mol%. The proportion of the 3,3',4,4'-biphenyltetracarboyxylic acid component being 60 mol% or more, the superior characteristics as a polyimide foam that are attributable to the 3,3',4,4'-biphenyltetracarboxylic acid component, such as heat resistance, hydrolysis resistance, alkali resistance, glass transition temperature, and chemical strength, are obtained easily. With the proportion less than 60 mol%, it is difficult to achieve these characteristics.
Examples of the tetracarboxylic acid component other than the 3,3',4,4'-biphenyltetracarboxylic acid component include a pyromellitic acid component, a benzophenonetetracarboxylic acid component, a 2,3,3',4'-biphenyltetracarboxylic acid component, a 4,4'-oxydiphthalic acid component, a 3,3',4,4'-biphenyltetracarboxylic acid component, and a 2,2-bis(4-phenoxyphenyl)propanetetracarboxylic acid component. As used herein, the term "tetracarboxylic acid component" refers to a tetracarboxylic acid compound capable of forming a polyimide, including a tetracarboxylic acid, an anhydride thereof, and an ester derivative thereof.

It is preferred to use m-phenylenediamine, 3,4'-oxydianiline, 2,4-diaminotoluene, or a mixture thereof as an aromatic diamine component forming a polyimide constituting the polyimide foam A. By using the above recited aromatic diamine component, a polyimide foam having a fine and uniform cell structure and exhibiting practical mechanical characteristics required of a foam, such as flexibility not to easily crack when deformed and good cushioning.

The polyimide foam A of the invention has a fine and uniform cell structure. The cells may be open or closed. As used herein, the term "cell" whether open or closed, refers to a bubble that is regarded to have resulted from expansion as a single bubble. Accordingly, a plurality of cells that are connected to one another at the completion of expansion are regarded to be individual cells. The cells of the polyimide foam A generally have a diameter of 5000 µm or less, preferably 3000 µm or less, more preferably 0.1 to 2000 µm, even more preferably 1 to 1000 µm. The term "generally" as used herein is intended to means that at least 80%, preferably 90% or more, of a cross-sectional area of the foam is composed of cells of the size recited. As used herein, the term "diameter" refers to the largest inner diameter of cells on a cross-section of the foam.

The polyimide foam A exhibits practical mechanical characteristics required of a foam, such as flexibility not to easily crack when deformed and good cushioning. In the present invention, the "flexibility not to easily crack when deformed" is evaluated by visually determining whether a crack forms when a rod-shaped specimen of the polyimide foam A with a 1 cm by 1 cm cross-section and a length of 5 cm is deformed into a closed loop. "Cushioning (properties)" is evaluated as follows. A 2 cm-side cubic specimen of the polyimide foam is compressed by applying a load to one surface of the specimen to a thickness of 0.2 cm (1/10 of the initial thickness), held in the compressed state for 30 seconds, and released from the load. After recovery from the compression, the permanent strain in thickness (the part of the thickness that is not restored) is measured and expressed in terms of ratio to the initial thickness.
The polyimide foam A has flexibility not to form a crack in the above described test in which a specimen is deformed into a closed loop and has a permanent strain of 10% or less in the above described cushioning test. In the invention, the polyimide foam A is evaluated by the above described practical methods of evaluation, the results of which demonstrate that the polyimide foam A possesses markedly high mechanical characteristics as a foam.

The polyimide form A has a fine and uniform cell structure preferably such that cells having a diameter ranging from 1 to 1000 µm occupy at least 80%, more preferably 90% or more, of a cross-sectional area of the foam.
The polyimide foam A preferably has an expansion ratio of at least 50, more preferably 100 or higher, and of 500 or lower, more preferably 40 or lower. At an expansion ratio lower than 50, not only is the foam too stiff to exhibit flexibility and cushioning, but the characteristics commonly expected of a foam, such as lightweight, are not obtained. At an expansion ratio higher than 500, the foam has reduced mechanical properties such that the foam easily cracks when deformed, failing to exhibit practical mechanical characteristics as a foam, such as flexibility and cushioning.

Having a fine and uniform cell structure formed of a sufficiently high molecular weight polyimide, the polyimide foam A may easily be designed to be a soft polyimide foam having either a low expansion ratio (high density) or a high expansion ratio (low density) and exhibiting excellent flexibility and cushioning

That is, the polyimide foam A of the invention is a polyimide foam formed of an aromatic polyimide prepared from a 3,3',4,4'-biphenyltetracarboxylic acid component and an aromatic diamine component, characterized by having flexibility such that no cracking occurs when a rod-shaped specimen of the polyimide foam with a 1 cm by 1 cm cross-section and a length of 5 cm is deformed into a closed loop; having cushioning properties such that, when a 2 cm-side cubic specimen of the polyimide foam is compressed by applying a load to one side of the specimen to a thickness of 0.2 cm, held in the compressed state for 30 seconds, and released from the load, the permanent strain in thickness is 10% or less; or having cells with a diameter ranging from 1 to 1000 µm occupying at least 80%, more preferably 90% or more, of a cross-sectional area of the foam.

The polyimide foam A of the invention is preferably a polyimide foam having an expansion ratio of at least 150 (an apparent density of 0.0092 g/cm³ or less), more preferably 170 or higher (an apparent density of 0.0081 g/cm³ less), even more preferably 185 or higher (an apparent density of 0.0075 g/cm³ or less), most preferably 200 or higher (an apparent density of 0.0068 g/cm³ or less), and 500 or lower (an apparent density of 0.0027 g/cm³ or more), more preferably 400 or lower (an apparent density of 0.0034 g/cm³ or more). The polyimide foam A whose expansion ratio (apparent density) is preferably, while not exclusively, within the recited range is a soft polyimide foam that is easily obtained and exhibits practical mechanical characteristics required of a foam, such as flexibility not to easily crack when deformed and good cushioning.

### Examples

The present invention will now be illustrated in greater detail with reference Examples, but it should be understood that the invention is not deemed to be limited thereto.

Abbreviations used hereunder have the following meanings.
s-BPDA: 3,3',4,4'-biphenyltetracarboxylic acid dianhydride
a-BPDA; 2,3',3,4'-biphenyltetracarboxylic acid dianhydride
MPD: m-phenylenediamine
3,4'-ODA: 3,4'-oxydianiline
2,4-DAT: 2,4-diaminotoluene
MDA: 4,4'-methylenedianiline
MeOH: methanol
(acid phosphoric esters)
JP-502:Ethyl acid phosphate JP-502 (from Johoku Chemical; monoethyl ester/diethyl ester mixture; decomposition temperature: 200°C)
JP-508:2-Ethylhexyl acid phosphate JP-508 (from Johoku Chemical; mono(ethylhexyl) ester/di(ethylhexyl) ester mixture; decomposition temperature: 198°C)
JC-224:Ethyl diethyl phosphonoacetate JC-224 (from Johoku Chemical; ethyl diethyl phosphonoacetate; decomposition temperature: 240°C)
JP-518-0:Oleyl acid phosphate JP-518-0 (from Johoku Chemical; monooleyl ester/dioleyl ester mixture; decomposition temperature: 200°C)

The following physical properties of polyimide foams were determined in according to the methods described below. Unless specified, other measurements were made following JIS K-6400.

### [Apparent density (density of polyimide foam) ]

A 50 mm-side cubic specimen was cut out of a polyimide foam and weighed to calculate its apparent density. The specimen was conditioned at 25°C and 50% RH for 24 hours before measurement, and the measurement was taken under the same conditions.

### [Expansion ratio]

A polyimide film was prepared from the same tetracarboxylic acid component and diamine component making up a polyimide foam to be examined. The maximum heating temperature was equal to the heating temperature of the pol imide foam. The density (true density) of the polyimide film was determined using a density gradient tube and a pycnometer. The true density of the polyimide film was divided by the apparent density of the polyimide foam to give the expansion ratio. The specimen was conditioned at 25°C and 50% RH for 24 hours before measurement, and the measurement was taken under the same conditions.

### [Uniformity of foam cells]

A polyimide foam was microtomed with a minimum load to obtain a specimen of 2 cm x 2 cm x 2 cm. Every face (cross-section) of the cube specimen was photographed under a scanning electron microscope (SEM) at a magnification of 20 times. The specimen was conditioned at 25°C and 50% RH for 24 hours before photographing, and the micrograph was taken under the same conditions.
The SEM micrograph was analyzed using image processing software (Scion Image, from Scion Corporation) as follows. One end of a selected specific cell was clicked, and the mouse was dragged to the other end of the cell to obtain the inner diameter of the cell. The mouse was dragged along the periphery of the cell to calculate the area of the cell. The total area of the selected specific cells was divided by the entire cross-sectional area to give the area ratio of the specific cells to the total cross-sectional area.
All the faces (cross-section) of the specimen were analyzed to obtain an average area ratio. The uniformity of the foam cells was rated "good" when the area ratio of cells with diameters of 1 to 1000 µm is 80% or more (in particular, the uniformity was noted "very good" when the area ratio of cells with diameters of 1 to 500 µm is 80% or more); "medium" when that area ratio is 50% or more and less than 80%; or "poor" when that area ratio is less than 50%.
Furthermore, the total area of closed cells obtained in the same manner was divided by the entire cross-sectional area to give the closed cell content (%).

### [Flexibility]

A rod-shaped specimen with a 1 cm by 1 cm cross-section and a length of 5 cm was cut out of a polyimide foam. The specimen was deformed in about 5 minutes until both ends thereof came into contact with each other to make a closed loop and inspected for any crack formation with the naked eye. A sample that formed a crack and fractured into two was rated "poor". A sample that formed a crack but did not fracture was rated "medium". A sample that formed no cracks was rated "good.
The specimen was conditioned at 25°C and 50% RH for 24 hours before measurement, and the measurement was taken under the same conditions.

### [Cushioning]

A 2 cm-side cubic specimen cut out of a polyimide foam was set on a compression tester (RPA-500, from Orientec Co., Ltd.), compressed by applying a load to the upper face of the specimen to a thickness of 0.2 cm (i.e., 1/10 of the initial thickness) while keeping the upper and lower faces of the specimen in parallel, held in the compressed state for 30 seconds, and released from the load. After the load was removed, the specimen was left to stand for 30 seconds for recovery from the compression, and the permanent strain in thickness (the part of the thickness that was not restored) was measured and expressed in terms of ratio to the initial thickness. A sample having a permanent strain of 0% to 10% was rated "good"; a permanent strain of 11% to 20%, "medium"; and a permanent strain of 20% or more, "poor".
When a specimen had anisotropy, an average of measurements taken in three directions was obtained. Every specimen was conditioned at 25°C and 50% RH for 24 hours before measurement, and the measurement was taken under the same conditions.

### Example 1

A 1000 ml pear-shaped flask were charged with 50 g (0.1699 mol) of s-BPDA and 94.5823 g of MeOH, and the mixture was stirred while refluxin using an oil bath maintained at 80°C for 120 minutes to esterify s-BPDA to obtain a uniform reaction solution. The reaction solution was cooled to room temperature, and 2.8375 g of 2-ethylhexyl acid phosphate JP-508 (acid phosphoric ester, from Johoku Chemical), 18.3730 g (0.1699 mol) of MPD (aromatic diamine component), and 0.9458 g of X-20-5148 (silicone-based surfactant, from Shin-Etsu Silicone) were added thereto, followed by stirring to obtain a uniform solution without forming precipitates. The solution was concentrated by removing MeOH (solvent) using an evaporator and dried to solid in a vacuum dryer at room temperature. The resulting solid was finely ground in a mortar to obtain a polyimide precursor powder. The powder was placed flat in a 100 mm x 100 mm x 10 mm metal mold and compressed at room temperature using a compression molding machine (S-37.5, Shinto Metal Industries Corp.) and a spacer. The resulting formed body was expanded into a polyimide foam by microwave heating using a microwave oven (RE-6200, from Sharp Corp.) at 1120 W for 5 minutes. The foam was then placed in a hot air oven (High Temperature Oven HTO-9B, from Koyo Thermo System Co., Ltd.) set at 200°C and post-heated at a maximum temperature of 360°C. The resulting polyimide foam had a fine and uniform cell structure and exhibited excellent flexibility and cushioning. The results are shown in Table 1.

### Example 2

A polyimide foam was obtained in the same manner as in Example 1, except for using ethyl acid phosphate JP-502 (from Johoku) as an acid phosphoric ester and 3,4'-ODA as an aromatic diamine component and conducting the post-heat treatment at a maximum temperature of 260°C. The resulting polyimide foam had a fine and uniform cell structure and exhibited excellent flexibility and cushioning. The results are shown in Table 1.

### Example 3

A polyimide foam was obtained in the same manner as in Example 1, except for using ethyl diethyl phosphonoacetate JC-224 (from Johoku) as an acid phosphoric ester and 2,4-DAT as an aromatic diamine component and conducting the post-heat treatment at a maximum temperature of 370°C. The resulting polyimide foam had a fine and uniform cell structure and exhibited excellent flexibility an cushioning. The results are shown in Table 1.

### Example 4

A polyimide foam precursor powder was prepared in the same manner as in Example 1, except for using oleyl acid phosphate JP-518-0 (from Johoku) as an acid phosphoric ester. A 100 g portion of the polyimide foam precursor was uniformly re-dissolved in 10 g of isopropyl alcohol. The solution was microwave-heated followed by post heating under the same conditions as in Example 1. The resulting polyimide foam had a fine and uniform cell structure and exhibited cellent flexibility and cushioning. The results are shown in Table 1.

### Example 5

A 1000 ml pear-shaped flask were charged with 50 g (0.1699 mol) of a-BPDA and 94.5823 g of MeOH, and the mixture was stirred while refluxing on an 80°C oil bath for 120 minutes to esterify a-BPDA to obtain a uniform reaction solution. The reaction solution was cooled to room temperature, and 2.8375 g of 2-ethylhexyl acid phosphate JP-508 (acid phosphoric ester, from Johoku Chenical), 33.6925 g (0.1699 mol) of MDA (aromatic diamine component), and 0.9458 g of X-20-5148 (silicone-based surfactant, from Shin-Etsu Silicone) were added thereto, followed by stirring to obtain a uniform solution without forming precipitates. The solution was concentrated by removing MeOH (solvent) using an evaporator and dried to solid in a vacuum dryer at room temperature. The resulting solid was finely ground in a mortar to obtain a polyimide precursor powder. The powder was placed flat in a 100 mm x 100 mm x 10 mm metal mold and compressed at room temperature using a compression molding machine (S-37.5, Shinto Metal Industries) and a spacer. The resulting formed body was expanded into a polyimide foam by microwave heating using a microwave oven (RE-6200, from Sharp Corp.) at 1120 W for 5 minutes. The foam was then placed in a hot air oven (High Temperature Oven HTO-9B, from Koyo Thermo System) set at 200°C and post-heated at a maximum temperature of 300°C. The resulting polyimide foam had a fine and uniform cell structure and exhibited excellent flexibility and cushioning. The results are shown in Table 1.

### Example 6

A polyimide foam was obtained in the same manner as in Example 5, except for using ethyl diethyl phosphonoacetate JC-224 (from Johoku) as an acid phosphoric ester. The resulting polyimide foam had a fine and uniform cell structure and exhibited excellent flexibility and cushioning. The results are shown in Table 1.

### Example 7

A polyimide foam precursor powder was prepared in the same manner as in Example 5. A 100 g portion of the polyimide foam precursor was uniformly re-dissolved in 12 g of MeOH. A polyimide foam was produced using the solution by microwave heating and subsequent post heating under the same conditions as in Example 5. The resulting polyimide foam had a fine and uniform cell structure and exhibited excellent flexibility and cushioning. The results are shown in Table 1.

### Comparative Example 1

The procedure of Example 1 was followed to prepare uniform reaction solution, except for using no acid phosphoric ester. That is, a 1000 ml pear-shaped flask was charged with 50 g (0.1699 mol) of s-BPDA and 94.5823 g of MeOH, and the mixture was stirred while refluxing using an 80°C oil bath for 120 minutes to esterify s-BPDA. The resulting reaction solution was cooled to room temperature, and 18.3730 g (0.1699 mol) of MPD (aromatic diamine component) and 0.9458 g of a silicone-based surfactant X-20-5148 (from Shin-Etsu Silicone) were added thereto, followed by stirring. Whereupon, a precipitate formed. In the same manner as in Example 1, the resulting mixture was concentrated and dried to solid, and the solid was powderized and heated. Expansion was extremely nonuniform. Quite unlike the polyimide foam of the invention, the resulting polyimide foam had a considerably coarse and nonuniform cellular structure and lacked cushioning and flexibility (i.e., friable foam). The results obtained are shown in Table 1.

### Comparative Example 2

A polyimide foam was obtained in the same manner as in Example 5, except for using no acid phosphoric ester. The resulting polyimide foam was unsatisfactory in flexibility and cushioning. The results obtained are shown in Table 1.

### Comparative Example 3

The procedure of Example 5 was followed except for using tributylphosphate instead of acid phosphoric esters, resulting in a failure to obtain a uniform polyimide foam. The results are shown in Table 1.

### Comparative Example 4

In 480 g of THF and 280 g of MeOH was dispersed 706 g (2.4 mol) of s-BPDA at room temperature. The dispersion was heated at 70°C while stirring for 6 hours to prepare a uniform solution. To the solution was added 488 g (2.4 mol) of 3,4'-ODA, followed by stirring for 2 hours to obtain a uniform polyimide precursor solution. The precursor solution was cast in a stainless steel tray and dried at 70°C for 14 hours. The resulting solid was cooled and ground to powder. The powder was heated at 80°C to obtain a solid polyimide precursor having a THF content of 3.9 wt% as measured by proton NMR analysis. The solid polyimide precursor was heated at 140°C for 60 minutes to expand and then at 300°C for 60 minutes to imidate. The resulting polyimide foam was post heated at 200°C for 2 hours to completely remove volatile components. The above described foam preparation procedure was in accordance with Example of patent document 6 cited *supra*. Certainly unlike the polyimide foam of the invention, the resulting polyimide foam had a very coarse and nonuniform cell structure and lacked cushioning and flexibility (friable foam). The results are shown in Table 1.

**Table 1**

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| Acid Component (mol%) | s-BPDA | 100 | 100 | 100 | 100 | - | - | - | 100 | - | - | 100 |
| | a-BPDA | - | - | - | - | 100 | 100 | 100 | - | 100 | 100 | - |
| Diamine Component (mol%) | MPD | 100 | - | - | 100 | - | - | - | - | - | - | - |
| | 3,4'-ODA | - | 100 | - | - | - | - | - | 100 | - | - | 100 |
| | 2,4-DAT | - | - | 100 | - | - | - | - | - | - | - | - |
| | MDA | - | - | - | - | 100 | 100 | 100 | - | 100 | 100 | - |
| Acid Phosphoric Ester | | JP-508 | JP-502 | JC-224 | JP-518-0 | JP-508 | JC-224 | JP-508 | - | - | - (tributyl phosphate) | - |
| Characteristics of Foam | Cell Uniformity | very good | good | good | very good | good | good | very good | poor | very good | poor | poor |
| | Closed Cell Content (%) | 91 | 93 | 90 | 91 | 95 | 92 | 90 | 94 | 93 | - | - |
| | Expansion Ratio | 298 | 265 | 250 | 389 | 143 | 147 | 203 | 69 | 106 | - | 52 |
| | Apparent Density (g/cm³) | 0.0045 | 0.0051 | 0.0054 | 0.0035 | 0.0097 | 0.0094 | 0.0068 | 0.020 | 0.013 | - | 0.026 |
| | Flexibility | good | good | good | good | good | good | good | poor | poor | poor | poor |
| | Cushioning | good | good | good | good | good | good | good | poor | poor | poor | poor |

### Industrial Applicability

The present invention provides a polyimide foam having practical mechanical properties required of a foam, such as flexibility not to easily crack when deformed and good cushioning properties and a process of producing a polyimide foam having a uniform cell structure and a high closed cell content.

In particular, the invention provides a polyimide foam prepared from a 3,3',4,4'-biphenyltetracarboxylic acid component and an aromatic diamine component, having a fine and uniform cell structure, and exhibiting practical mechanical properties required of a foam, such as flexibility not to easily crack when deformed and good cushioning properties and a process for producing the same.

## Claims

1. A process for producing a polyimide foam comprising the steps of dissolving an aromatic tetracarboxylic acid component and an aromatic diamine component in a solvent in the presence of an acid phosphoric ester represented by chemical formula (1): 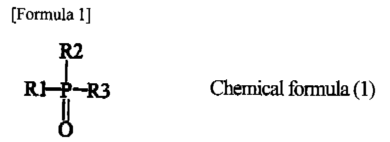 wherein the definitions of R1, R2, and R3 are selected from the following combinations of substituents: (a) R1 is OH, and R2 and R3 are each independently OR; (b) R1 and R2 are each OH, and R3 is OR; and (c) R1 is CH₂COOY, and R2 and R3 are each independently OR; wherein R is an alkyl group having 1 to 25 carbon atoms or an alkenyl group having 1 to 25 carbon atoms, the alkyl group and the alkenyl group being optionally substituted with an alkoxy group having 1 to 25 carbon atoms or an alkyl group having 1 to 5 carbon atoms; and Y is a hydrogen atom or an alkyl group having 1 to 5 carbon atoms,
to prepare a polyimide precursor and heating the polyimide precursor to cause the polyimide precursor to expand.

2. The process according to claim 1, wherein the aromatic tetracarboxylic acid component is a 3,3',4,4'-biphenyltetracarboxylic acid component.

3. The process according to claim 1 or 2, wherein the acid phosphoric ester is present in an amount of 0.1 to 10 parts by mass per 100 parts by mass of the total of the aromatic tetracarboxylic acid component and the aromatic diamine component.

4. The process according to any one of claims 1 to 3, wherein the acid phosphoric ester has a decomposition temperature of 180°C or higher.

5. The process according to any one of claims 1 to 4, wherein the polyimide precursor has the form of a green body of powder.

6. The process according to any one of claims 1 to 4, further comprising, before the step of heating, the step of mixing the polyimide precursor with at least one compound that is liquid at ambient temperature and selected from the group consisting of water, an alcohol, and an ether.

7. The process according to any one of claims 1 to 6, wherein the heating is microwave heating.

8. The process according to any one of claims 1 to 7, further comprising, after the step of heating to expand, the step of post-heating the polyimide foam at a temperature higher than the glass transition temperature of the polyimide constituting the polyimide foam.

9. A polyimide foam produced by the process according to any one of claims 1 to 8.

10. A polyimide foam comprising an aromatic polyimide prepared from a 3,3',4,4'-biphenyltetracarboxylic acid component and an aromatic diamine component, the polyimide foam having flexibility at least such that no cracking occurs when a specimen of the polyimide foam with a 1 cm by 1 cm cross-section and a length of 5 cm is deformed until both ends thereof come into contact with each other r to make a closed loop.

11. The polyimide foam according to claim 10, having cushioning properties such that, when a 2 cm-side cubic specimen of the polyimide foam is compressed by applying a load to one surface of the specimen to a thickness of 0.2 cm, held in the compressed state for 30 seconds, and released from the load, the permanent strain in thickness is 10% or less.

12. The polyimide foam according to claim 10 or 11, having cells with a diameter ranging from 1 to 1000 µm occupying at least 80% of a cross-sectional area of the foam.

13. The polyimide foam according to any one of claims 10 to 12, wherein the aromatic diamine component is m-phenylenediamine, 3,4'-oxydianiline, 2,4-diaminotoluene, or a mixture thereof.

14. A polyimide foam comprising an aromatic polyimide prepared from a 3,3',4,4'-biphenyltetracarboxylic acid component and an aromatic diamine component and having an expansion ratio of at least 150 (an apparent density 0.0092 g/cm³ or less).

15. A process for producing the polyimide foam according to any one of claims 10 to 14, comprising the steps of dissolving the 3,3',4,4'-biphenyltetracarboxylic acid component and the aromatic diamine component in a solvent in the presence of an acid phosphoric ester represented by chemical formula (1): 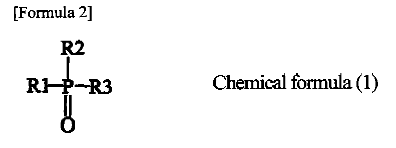 wherein the definitions of R1, R2, and R3 are selected from the following combinations of substituents: (a) R1 is OH, and R2 and R3 are each independently OR; (b) R1 and R2 are each OH, and R3 is OR; and (c) R1 is CH₂COOY, and R2 and R3 are each independently OR; wherein R is an alkyl group having 1 to 25 carbon atoms or an alkenyl group having 1 to 25 carbon atoms, the alkyl group and the alkenyl group being optionally substituted with an alkoxy group having 1 to 25 carbon atoms or an alkyl group having 1 to 5 carbon atoms; and Y is a hydrogen atom or an alkyl group having 1 to 5 carbon atoms,
to prepare a polyimide precursor and heating the polyimide precursor to cause the polyimide precursor to expand.
